# EUROPÄISCHE PATENTSCHRIFT

(11) **EP 2 577 121 B1**
(45) Veröffentlichungstag und Bekanntmachung des Hinweises auf die Patenterteilung: **27.12.2017**
(21) Anmeldenummer: 11721005.4
(22) Anmeldetag: 21.05.2011
(51) Int. Cl.: F16K 11/20, B01D 35/12, F16K 35/14

(54) **SCHALTVORRICHTUNG ZUR LEITUNG EINES FLUIDS**
SWITCHING DEVICE FOR CONDUCTING A FLUID
DISPOSITIF DE COMMANDE POUR LE GUIDAGE D'UN FLUIDE

(30) Priorität: 02.06.2010 DE 102010022575
(43) Veröffentlichungstag der Anmeldung: 10.04.2013
(73) Patentinhaber: Hydac Process Technology GmbH, 66538 Neunkirchen (DE)
(72) Erfinder: SCHLICHTER, Bernhard, 66123 Saarbrücken (DE); DEUTSCHMEYER, Manfred, 66706 Perl (DE)
(74) Vertreter: Bartels, Martin Erich Arthur
(86) Internationale Anmeldenummer: PCT/EP2011/002541
(87) Internationale Veröffentlichungsnummer: WO 2011/151023

(56) Entgegenhaltungen:
- EP-A2- 1 731 809
- WO-A1-01/29467
- GB-A- 2 236 829
- US-A- 746 896
- US-A- 4 429 711

## Beschreibung

Die Erfindung betrifft eine Schaltvorrichtung zur Leitung eines Fluids mit den Merkmalen im Oberbegriff von Anspruch 1.

Die EP 1 731 809 A2 offenbart eine Schaltvorrichtung für zwei Mehrfachbehandlungsvorrichtungen in der Art von Filtereinrichtungen zum Filtern eines Fluidstromes. Die Mehrfachbehandlungsvorrichtungen der gattungsgemäßen Art sind beispielsweise zwei Filtervorrichtungen, die über eine Einlassverbindungsleitung und eine Auslassverbindungsleitung miteinander fluidführend verbunden sein können. In jeder Verbindungsleitung ist ein einlassseitiges Verteilerventil, bzw. ein auslassseitiges Verteilerventil für jede Behandlungsvorrichtung vorgesehen. In jedem Verteilerventil ist ein Ventilelement oder Ventilkörper angeordnet, der zwischen zwei Schaltstellungen hin- und herbewegbar ist, wobei in den Schaltstellungen jeweils einer der Behandlungseinrichtungen mit dem Fluidstrom beaufschlagt ist und die andere Behandlungseinrichtung von dem betreffenden Fluidstrom abgesperrt ist. Die Ventilkörper des jeweils einlassseitigen und auslassseitigen Verteilerventils sind über eine Schaltwelle drehfest miteinander verbunden. Dadurch ist eine gewünschte simultane Betätigung der Verteilerventile ermöglicht. Für die Filterung von giftigen oder umweltschädlichen Gasen ist zudem als Sicherheitseinrichtung zwischen zwei Dichtstellen an einem jeden Ventilelement der Verteilerventile ein sogenannter Bleed-Anschluss mit Entlüftungs- und Zwischenabsaugungsvorrichtung vorgesehen.

Die Schaltvorrichtungen gemäß dem Stand der Technik sind in Bezug auf ihren Montageaufwand nicht optimiert, da insbesondere die Verwendung der Schaltwellen kein gleichartig aufgebautes Ventilgehäuse und keine gleichartig aufgebauten Ventilelemente erlauben, so dass sich hieraus ein zusätzlicher Montage- und Komponentenaufwand ergibt.

Die WO 01/29467 A1 offenbart eine Schaltvorrichtung zur Leitung eines Fluids, umfassend mindestens ein Verteilerventil in einer ersten fluidführenden Verbindung zwischen einer ersten Behandlungseinrichtung für das Fluid und einer zweiten Behandlungseinrichtung für das Fluid, und mindestens ein weiteres Verteilerventil in einer zweiten fluidführenden Verbindung zwischen der ersten und der zweiten Behandlungseinrichtung, wobei die Verteilerventile jeweils der ersten und/oder der zweiten Behandlungseinrichtung zugeordnet sind und jeweils einen manuell betätigbaren Schalthebel zur Schaltung des jeweiligen Verteilerventils zumindest zwischen einem Sperren und Öffnen der jeweiligen fluidführenden Verbindung zur jeweiligen Behandlungseinrichtung aufweisen. Bei dieser Schaltvorrichtung müssen stets mehrere Schalthebel betätigt werden, um einen gewünschten Fluidfluss zu erzeugen. Dies ist mit einem hohen Aufwand verbunde. Zudem können Fehlbedienungen auftreten.

Eine weitere Schaltvorrichtung wird durch die US 746 896 aufgezeigt. Bei Dieser Schaltvorrichtung sind zwei Schalthebel vorgesehen, die auf einander zu verlaufen und sich kontaktieren.

Ausgehend von diesem Stand der Technik liegt der Erfindung die Aufgabe zugrunde, eine Schaltvorrichtung anzugeben, die kostengünstig, deren Montageaufwand gering und die funktionssicher im Gebrauch ist.

Eine dahingehende Aufgabe wird mit einer Schaltvorrichtung mit den Merkmalen des Patentanspruches 1 in seiner Gesamtheit gelöst.

Eine erfindungsgemäße Schaltvorrichtung zeichnet sich dadurch aus, dass die separaten Schalthebel der der jeweiligen Behandlungseinrichtung zugeordneten Verteilerventile derart ausgebildet und angeordnet sind, dass sie mit einer Hand einer Bedienperson synchron betätigbar sind, dass jede Längsachse eines zugeordneten Schalthebels, von einem Ventilelement ausgehend, zu ihrem jeweiligen freien Ende hin betrachtet, gekröpft ausgebildet ist und dass die freien Enden räumlich eng zusammengeführt sind, ohne sich gegenseitig zu berühren.

Vorteilhafte Ausgestaltungen der erfindungsgemäßen Schaltvorrichtung sind Gegenstände der Unteransprüche.

Dadurch, dass eine Kopplung der Ventilelemente der in erster und zweiter fluidführenden Verbindung angeordneten Verteilerventile, deren Funktion zum Betrieb der Behandlungseinrichtungen zu koppeln ist, derart realisiert ist, dass diese nicht miteinander über eine Schaltwelle oder in anderer getrieblicher Weise verbunden sind, ist es ermöglicht, die Verteilerventile paarweise zumindest in Bezug auf ihr Ventilgehäuse und den Ventilelementen identisch auszubilden. Die Ventilelemente sind jeweils mit einem Schalthebel verbunden, wobei die Schalthebel derart räumlich zueinander angeordnet sind, dass die Schalthebel zumindest paarweise mit einer Hand betätigt werden können und somit auch die Verteilerventile synchron betätigbar sind. Die Verteilerventile lassen sich somit ohne die Notwendigkeit einer mechanischen Kopplung ihrer Ventilelemente, etwa durch Schaltwellen, funktionsgerecht und sicher durch eine Bedienperson bedienen.

Durch den Verzicht auf mechanische Kopplungsmittel können die Verteilerventile auch annähernd oder vollkommen identisch ausgebildet sein, was die Herstellungskosten der Schaltvorrichtung senken hilft. Es bedarf keiner Wellendurchführungen an den Ventilgehäusen und dergleichen aufwendiger Getriebekopplungen für die einzelnen Verteilerventile. Dennoch ist es möglich, die Form der Schalthebel identisch zu wählen, etwa indem ein gekröpfter Verlauf ihrer Längsachsen und Außenflächen zueinander vorgesehen ist. Dadurch können beispielsweise je zwei Schalthebel spiegelbildlich zueinander an die über eine gemeinsame Längsachse fluchtend angeordneten Verteilerventile der Schaltvorrichtung angebaut sein. So ergibt sich in überraschend einfacher und vorteilhafter Weise eine zueinander geführte Position der freien Enden der Schalthebel. Die Schalthebelenden lassen sich dadurch mühelos und sehr präzise mit einer Hand in die gewünschte Schaltposition gemeinsam führen, aber auch einzeln von Hand je nach Bedarfsfall ansteuern.

Zum Betrieb der Behandlungseinrichtungen ist es in der Regel erforderlich, dass die Ventilelemente der paarweise in ihrer Funktion gekoppelten Verteilerventile dieselbe Position relativ zu ihren Schalthebeln aufweisen. Die Ventilelemente sind daher bevorzugt mit gleichen Durchlassöffnungen, etwa T-förmig oder L-förmig oder mit geraden Durchlassöffnungen versehen.

Um ein besonders sicheres Umschalten beim Betrieb von der ersten zu der zweiten Behandlungseinrichtung und umgekehrt zu gewährleisten, ist es vorteilhaft, zwischen die beiden Verteilerventile in der ersten fluidführenden Verbindung und der zweiten fluidführenden Verbindung jeweils ein Sicherheitsventil vorzusehen, das vorzugsweise zudem die Ableitung und die Zuleitung von Fluid in jeweils eine der beiden Behandlungseinrichtungen ermöglicht. Dieses fünfte und sechste Ventil kann ein Ventilelement mit L-förmiger Durchgangsöffnung aufweisen und in derselben Weise mit zwei, mit einer Hand betätigbaren, Schalthebeln bedienbar sein.

Diese Sicherheitsventile sind bevorzugt aber mit einer mechanischen Koppelung, insbesondere in der Art einer Schaltwelle gekoppelt. Diese Ventile können zudem zum Druckausgleich einer ersten und zweiten fluidführenden Verbindung zwischen der ersten und zweiten Behandlungseinrichtung mit einem Nadelventil versehen sein. Auf diese Weise lässt sich eine außer Betrieb gestellte Behandlungseinrichtung sicher in einen drucklosen Zustand überführen. Die Behandlungseinrichtung kann dann etwa zum Tausch von Filtern oder zu sonstigen Maßnahmen, wie etwa zum Tausch von verschlissenen Prozessführungselementen oder-einrichtungen, entsprechend geöffnet werden.

Im Folgenden wird eine Schaltvorrichtung zum Schalten eines Fluidstromes zwischen zwei Behandlungseinrichtungen und deren Funktion an einem Ausführungsbeispiel näher erläutert. In der Zeichnung zeigen:
- Fig. 1: ein Ausführungsbeispiel einer Schaltvorrichtung für einen Fluidstrom, insbesondere für die Leitung eines unter hohem Druck stehenden Fluids in zwei Behandlungseinrichtungen; und
- Fig. 2 bis 8: jeweils eine schematische Seitenansicht der Behandlungseinrichtung mit jeweils einer mittig dargestellten schematischen Draufsicht auf die Schaltvorrichtung gemäß der Darstellung nach der Fig. 1 in verschiedenen Betriebsphasen beim jeweiligen Umschalten des Fluidstroms von einer Behandlungseinrichtung zu der anderen Behandlungseinrichtung.

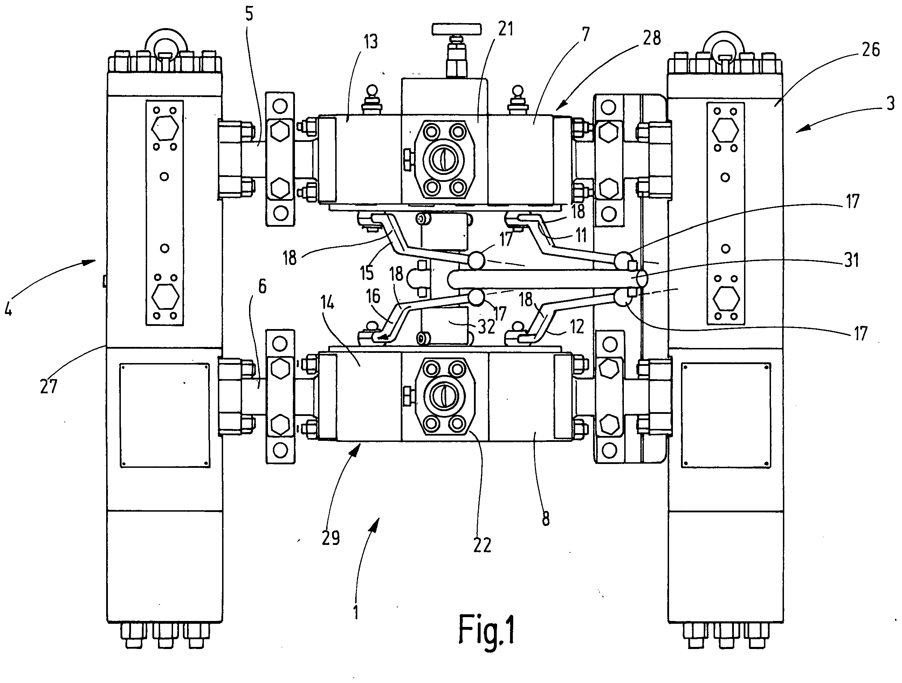

In der Fig. 1 ist ein Ausführungsbeispiel einer Schaltvorrichtung 1 zur Leitung eines Fluids 2 gezeigt, das einen flüssigen, zu filtrierenden Prozessstrom darstellt, in wahlweise eine erste oder eine zweite Behandlungseinrichtung 3 (=A) bzw. 4 (=B). Die Behandlungseinrichtungen 3, 4 sind in dem gezeigten Ausführungsbeispiel jeweils mit einem Filtergehäuse ausgebildet, die entsprechende Filterelemente enthalten. Die Schaltvorrichtung 1 dient insbesondere hierbei zur Steuerung des Zuflusses von Fluid 2, über ein Ventil 22 wahlweise in die erste Behandlungseinrichtung 3 oder in die zweite Behandlungseinrichtung 4.

Die Behandlungseinrichtungen 3, 4 sind über eine erste fluidführende Verbindung 5 und eine zweite fluidführende Verbindung 6 miteinander fluidführend verbindbar oder wieder voneinander trennbar. Die fluidführenden Verbindungen 5, 6 sind als druckfeste Rohrleitungen mit Schraubflanschen zwischen den jeweiligen druckfesten Gehäusen 26, 27 der ersten Behandlungseinrichtung 3 und der zweiten Behandlungseinrichtung 4 angeordnet. Die erste fluidführende Verbindung 5 dient zur Abfuhr von filtriertem Fluid 2, während die zweite fluidführende Verbindung 6 zur Zufuhr von unfiltriertem Fluid in die eine oder andere Behandlungseinrichtung 5, 6 vorgesehen ist.

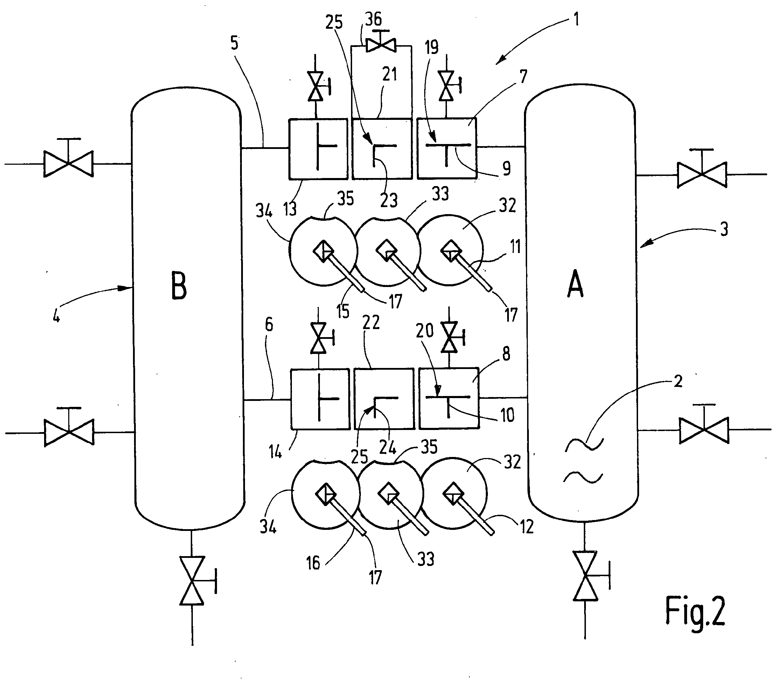

Die Abfuhr von filtriertem Fluid erfolgt über ein Ventil 21, das mittig, in der ersten fluidführenden Verbindung 5 angeordnet ist. Ebenso ist das Ventil 22 in etwa mittig in der zweiten fluidführenden Verbindung 5 angeordnet. Insgesamt befinden sich die beiden Ventile 21, 22 in jeweils einem Ventilblock 28, 29, mit jeweils zwei seitlich angrenzenden, weiteren Ventilen. In der ersten fluidführenden Verbindung 5 sind mithin zu beiden Seiten des Ventils 21 ein erstes Verteilerventil 7 und ein drittes Verteilerventil 13 in dem Ventilblock 28 angeordnet. In der zweiten fluidführenden Verbindung 6 sind zu beiden Seiten des Ventils 22 ein zweites und ein viertes Verteilerventil 8, 14 in dem Ventilblock 29 angeordnet. Die Verteilerventile 7, 13 und 8, 14 sind mit als Kugelsegmente ausgebildeten Ventilelementen 9, 10 versehen, deren Durchlassöffnungen 19, 20 jeweils T-förmig ausgestaltet sind (vgl. Fig. 2 bis 8).

Das erste und das zweite Verteilerventil 7, 8 sind der ersten Behandlungseinrichtung 3 benachbart und dieser zugeordnet in dem Sinne, dass sie die jeweiligen fluidführenden Verbindungen 5, 6 zu der ersten Behandlungseinrichtung 3 sperren oder öffnen können. Das dritte und vierte Verteilerventil 13, 14 ist der zweiten Behandlungseinrichtung 4 in gleicher Funktionsweise zugeordnet. In dem gesperrten Zustand der betreffenden Verteilerventile 7, 8, 13, 14 sind die Behandlungseinrichtungen 3, 4 entleerbar oder für andere Prozessschritte als dem Fluiddurchfluss nutzbar, wie etwa zu Wartungsarbeiten, zum Tausch von Prozessführungselementen, wie Filtern und dergleichen.

Neben der Zufuhr- oder Abfuhrfunktion von Fluid oder Reinigungsmitteln oder dergleichen Prozessstoffe haben die mit fünftem und sechstem Ventil weiter bezeichneten Ventile 21, 22 noch die Aufgabe mit Hilfe von integrierten Nadelventilen 36 den Druckausgleich in Vorbereitung der Umschaltung von einer Behandlungseinrichtung zur anderen in den fluidführenden Verbindungen 5, 6 zu bewirken. Die Ventilelemente 23, 24 des dahingehend fünften und sechsten Ventils 21, 22 haben L-förmige Durchlassöffnungen 25, die somit ein Umschalten des Zufuhr- oder Abfuhr-Fluidstroms von der ersten Behandlungseinrichtung 3 und der zweiten Behandlungseinrichtung 4 entsprechend steuern können.

Wie insbesondere die Fig. 1 des Weiteren zeigt, sind das erste und zweite sowie das dritte und vierte Verteilerventil 7, 8, 13, 14 mit manuell betätigbaren Schalthebeln 11, 12, 15, 16 versehen. Die Schalthebel 11 und 15 des ersten und dritten Verteilerventils 7, 13 sind hängend an dem jeweiligen Ventilelement angeschraubt, während die Schalthebel 12, 16 in umgekehrter Weise zu den Schalthebeln 11, 5 gerichtet, an den betreffenden Ventilelementen der Verteilerventile 8, 14 von oben her angeschraubt sind. Jede Längsachse 18 eines zugeordneten Schalthebels ist, von dem Ventilelement ausgehend, zu ihrem jeweiligen freien Ende 17 hin betrachtet, gekröpft ausgebildet. Dadurch sind die freien Enden 17 räumlich eng zusammengeführt, allerdings ohne sich gegenseitig zu berühren. So lassen sich die jeweils freien Enden 17 des ersten und zweiten Schalthebels 11, 12 und die freien Enden 17 des dritten und vierten Schalthebels 14, 16 mit einer Hand gemeinsam greifen und synchron die Schalthebel von einer Schaltposition in die anderen führen. Vorzugsweise sind dabei keine Rastungen zu überwinden.

Das fünfte und sechste Ventil 21, 22 bzw. deren Ventilelemente 23, 24 sind in üblicher Weise über eine Welle 30 zwangsgekoppelt und lassen sich nur gemeinsam verdrehen. Zu diesem Zweck weist die Welle 30 einen weiteren, handbetätigbaren Schalthebel 31 auf, der in dieselbe Richtung ragend gezeigt, wie die übrigen Schalthebel, so dass die gesamte Schaltvorrichtung 1 von einer einzigen Bedienerseite her durch eine Bedienperson bedienbar ist.

Wie die schematisierten Draufsichten gemäß den Darstellungen nach den Fig. 2 bis 8 zeigen, ist der mögliche Umschaltvorgang von einer Behandlungseinrichtung 3 zur anderen Behandlungseinrichtung 4 über die Betätigung der jeweiligen Schalthebel unter Einsatz von Steuerscheiben 32, 33, 34 insoweit zwangsgekoppelt. Die Steuerscheiben 32, 33, 34 sind mit den jeweiligen, zuordenbaren Schalthebeln oder Ventilelementen fest verbunden und weisen jeweils einen kreissegmentförmigen Ausschnitt 35 an ihrem Umfangsrand auf. Der Ausschnitt 35 einer jeden Steuerscheibe kann mit einem Umfangsrand der jeweils benachbarten Steuerscheibe dahingehend zusammenwirken, dass eine Drehbewegung ermöglicht oder eben blockiert ist.

Die Fig. 2 zeigt eine Betriebsposition der Schaltvorrichtung 1, in der die erste Behandlungseinrichtung 3 mit Fluid 2 über das sechste Ventil 22 und das zweite Verteilerventil 8 angeströmt wird. Das Fluid 2 verlässt über das erste Verteilerventil 7 und das fünfte Ventil 21 die dahingehend erste Behandlungseinrichtung 3. Die Steuerscheiben 32, 33 der genannten Ventile sind durch die Anlage der Steuerscheiben 32 mit ihren Abschnitten 35 an dem Umfangsrand der Steuerscheiben 33 blockiert. Die zweite Behandlungseinrichtung 4 ist drucklos und kann beispielsweise in der dahingehenden Betriebsphase gewartet werden. So kann in dieser Betriebsphase ein Austausch von nicht näher dargestellten Filterelementen (Altelement gegen Neuelement) stattfinden. In beiden Behandlungseinrichtungen 3, 4 sind ansonsten dieselben Prozessschritte, nämlich eine Filterung für das die Filterelemente zu durchströmende Fluid 2, vorgesehen.

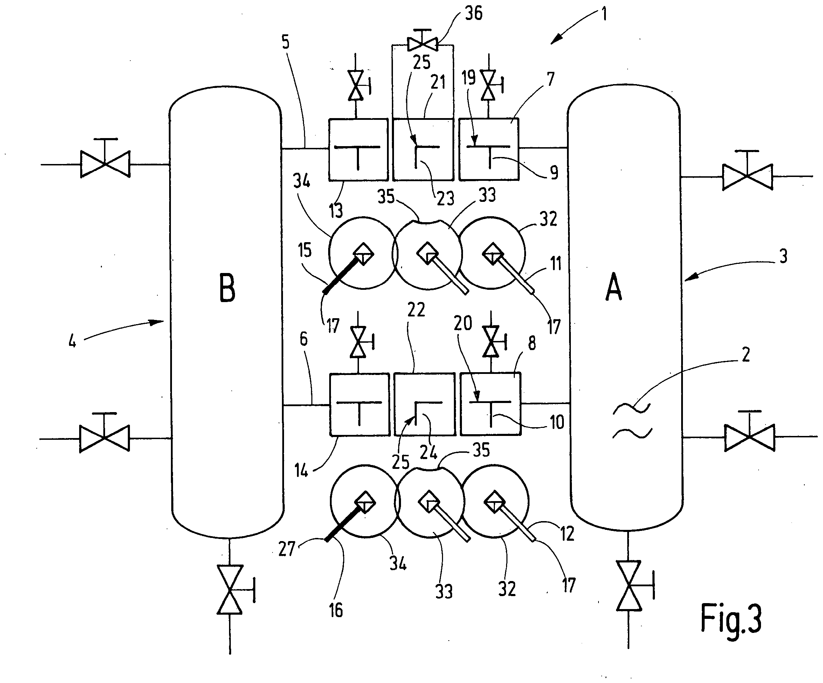

Die weiteren Fig. 3 bis 8 zeigen den Umschaltvorgang an der Schaltvorrichtung 1 von dem Betrieb der ersten Behandlungseinrichtung 3 zu der zweiten Behandlungseinrichtung 4. In der Fig. 3 ist zunächst ein Entsperren der dritten und vierten Verteilerventile 13, 14 aufgezeigt. Deren Schalthebel 15, 16 werden in Betrachtungsrichtung auf die Fig. 3 gesehen nach links verschwenkt. Die übrigen Ventile verbleiben in ihrer gezeigten Schaltposition.

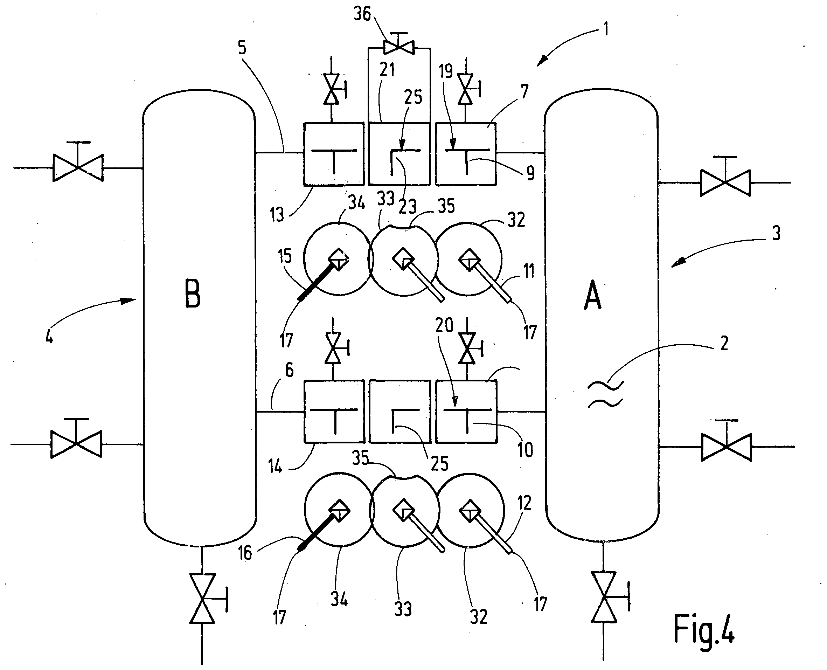

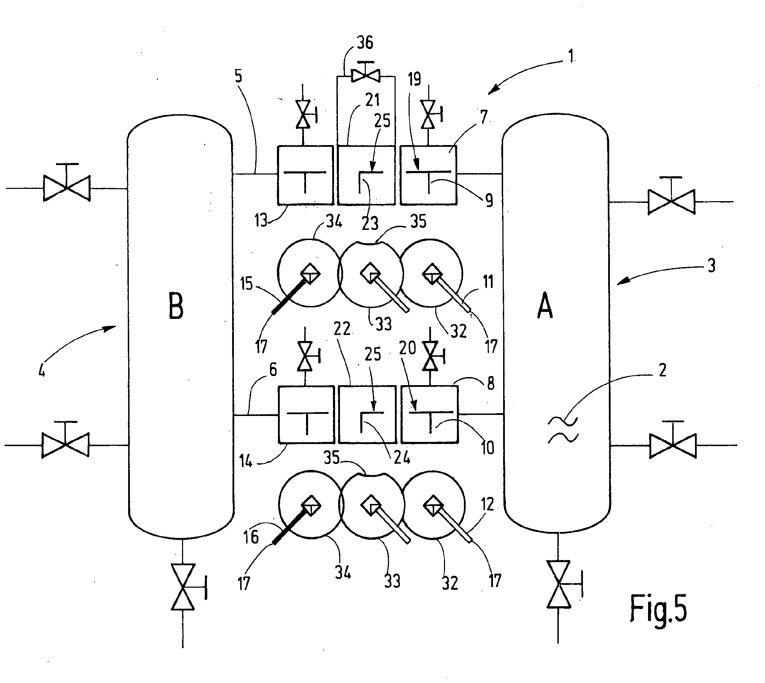

In der Fig. 4 ist ein nachfolgender Druckausgleich zwischen der ersten Behandlungseinrichtung 3 über das Nadelventil 36 gezeigt, das das fünfte Ventil 21 überbrückt. Fig. 5 wiederum verdeutlicht den abgeschlossenen Druckausgleichsvorgang.

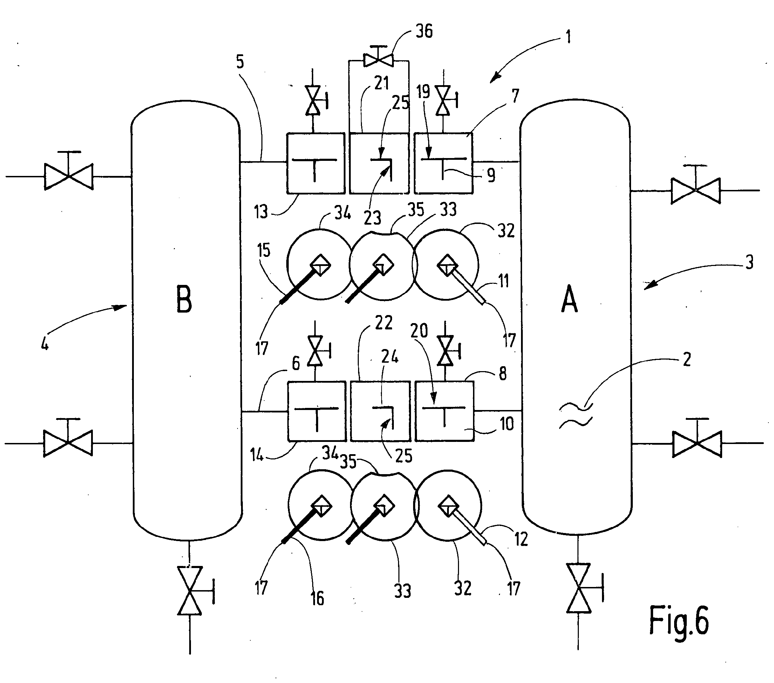

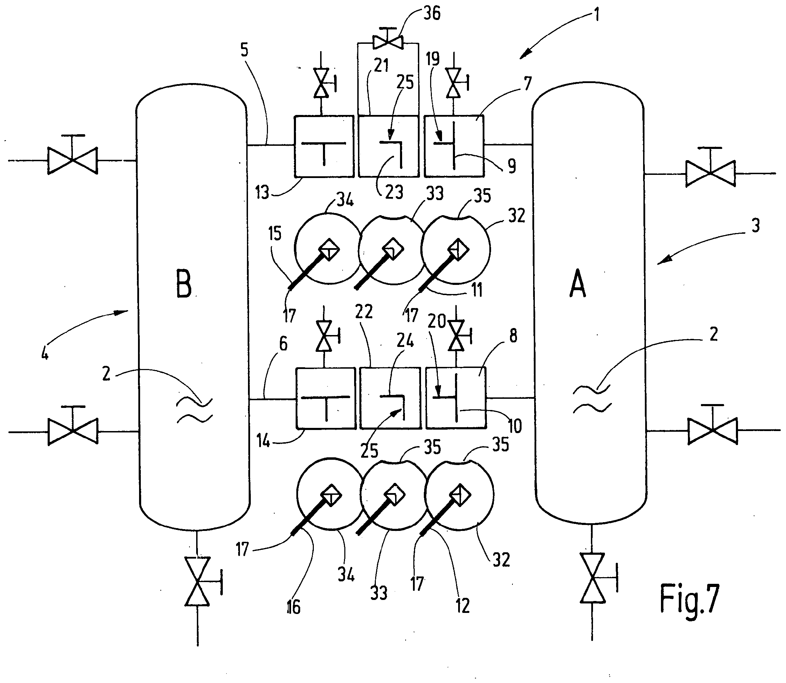

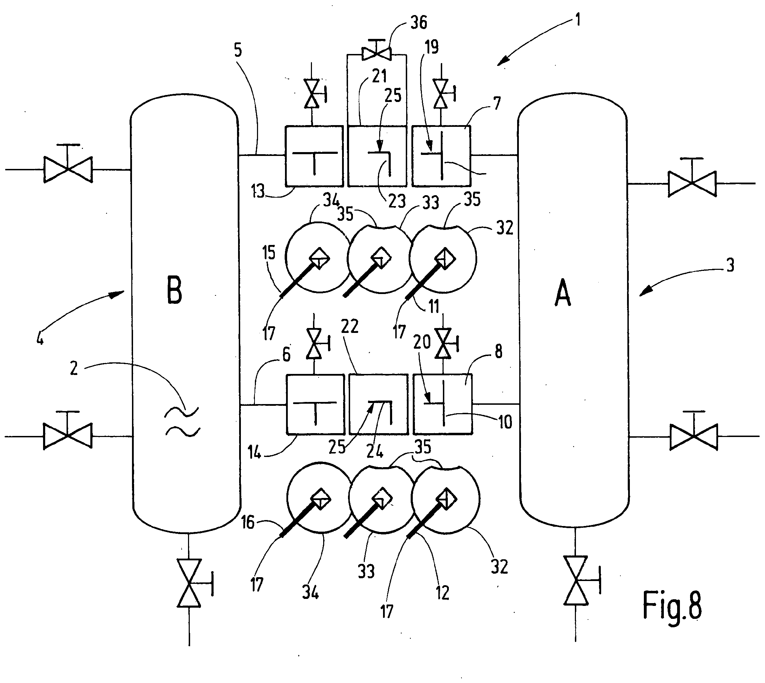

In der Fig. 6 ist das Umschalten von dem Betrieb der ersten Behandlungseinrichtung 3 zu der zweiten Behandlungseinrichtung 4 gezeigt. Dazu wird der Schalthebel 31 an der Welle 30 von rechts nach links verschwenkt. Das fünfte und sechste Ventil 21, 22 lenken den Fluidstrom dadurch zu der zweiten Behandlungseinrichtung 4. In den Fig. 7 und 8 wird das Absenken des Druckes in der ersten Behandlungseinrichtung 3 gezeigt, wobei die auf den Ventilelementen gezeigten Schaltsymbole den jeweiligen Schaltvorgang sinnfällig für den Betrachter darstellen.

## Patentansprüche

1. Schaltvorrichtung zur Leitung eines Fluids (2), umfassend:
- eine erste Behandlungseinrichtung (3) für das Fluid,
- eine zweite Behandlungseinrichtung (4) für das Fluid,
- mindestens ein Verteilerventil (7, 13) in einer ersten fluidführenden Verbindung (5) zwischen einer ersten Behandlungseinrichtung (3) für das Fluid (2) und einer zweiten Behandlungseinrichtung (4) für das Fluid (2),
- mindestens ein weiteres Verteilerventil (8, 14) in einer zweiten fluidführenden Verbindung (6) zwischen der ersten (3) und der zweiten Behandlungseinrichtung (4),
wobei die Verteilerventile (7, 8, 13, 14) jeweils der ersten (3) oder der zweiten Behandlungseinrichtung (4) zugeordnet sind und jeweils einen manuell betätigbaren Schalthebel (11, 12, 15, 16) zur Schaltung des jeweiligen Verteilerventils (7, 8, 13, 14) zumindest zwischen einem Sperren und Öffnen der jeweiligen fluidführenden Verbindung (5, 6) zur jeweiligen Behandlungseinrichtung (3, 4) aufweisen, **dadurch gekennzeichnet, dass** die separaten Schalthebel (11, 12, 15, 16) der der jeweiligen Behandlungseinrichtung (3, 4) zugeordneten Verteilerventile (7, 8, 13, 14) derart ausgebildet und angeordnet sind, dass sie mit einer Hand einer Bedienperson synchron betätigbar sind, dass jede Längsachse (18) eines zugeordneten Schalthebels (11, 12, 15, 16), von einem Ventilelement (9, 10) ausgehend, zu ihrem jeweiligen freien Ende (17) hin betrachtet, gekröpft ausgebildet ist und dass die freien Enden (17) räumlich eng zusammengeführt sind, ohne sich gegenseitig zu berühren.

2. Schaltvorrichtung nach Anspruch 1, **dadurch gekennzeichnet, dass** in den fluidführenden Verbindungen (5, 6) jeweils zwei Verteilerventile (7, 8, 13, 14) angeordnet sind, dass ein erstes Verteilerventil (7) in der ersten fluidführenden Verbindung (5) und ein zweites Verteilerventil (8) in der zweiten fluidführenden Verbindung (6) der ersten Behandlungseinrichtung (3) zugeordnet und ihre Schalthebel (11, 12) paarweise synchron betätigbar sind, und dass ein drittes Verteilerventil (13) in der ersten fluidführenden Verbindung (5) und ein viertes Verteilerventil (14) in der zweiten fluidführenden Verbindung (6) der zweiten Behandlungseinrichtung (4) zugeordnet und ihre Schalthebel (15, 16) paarweise synchron betätigbar sind.

3. Schaltvorrichtung nach Anspruch 1 oder 2, **dadurch gekennzeichnet, dass** alle Schalthebel (11, 12, 15, 16) dieselbe Gestalt aufweisen.

4. Schaltvorrichtung nach einem der vorhergehenden Ansprüche, **dadurch gekennzeichnet, dass** alle Schalthebel (11, 12, 15, 16) jeweils einen gekröpften, mit ihren freien Enden (17) aufeinander zugewandten Verlauf bezogen auf ihre Längsachsen (18) aufweisen.

5. Schaltvorrichtung nach einem der vorhergehenden Ansprüche, **dadurch gekennzeichnet, dass** die jeweils gemeinsam betätigbaren Verteilerventile (7, 8, 13, 14) in der ersten und zweiten fluidführenden Verbindung (5, 6) dieselben Durchlassöffnungen (19, 20) an ihrem Ventilelement (9,10) aufweisen.

6. Schaltvorrichtung nach Anspruch 5, **dadurch gekennzeichnet, dass** die Durchlassöffnungen (19, 20) der Ventilelemente (9, 10) der Verteilerventile (7, 8, 13, 14) einen T-förmigen Aufbau haben.

7. Schaltvorrichtung nach einem der vorhergehenden Ansprüche, **dadurch gekennzeichnet, dass** ein weiteres Ventil (21) in der ersten fluidführenden Verbindung (5) zur Zu- und/oder Abfuhr von Fluid (2) vorgesehen ist.

8. Schaltvorrichtung nach Anspruch 2 und 7, **dadurch gekennzeichnet, dass** das weitere Ventil (21) zwischen dem ersten (7) und dem dritten Verteilerventil (13) angeordnet ist.

9. Schaltvorrichtung nach einem der vorhergehenden Ansprüche, **dadurch gekennzeichnet, dass** ein weiteres Ventil (22) in der zweiten fluidführenden Verbindung (6) zur Zu- und/oder Abfuhr von Fluid (2) vorgesehen ist.

10. Schaltvorrichtung nach Anspruch 2 und 9, **dadurch gekennzeichnet, dass** das weitere Ventil (22) zwischen dem zweiten (8) und dem vierten Verteilerventil (14) angeordnet ist.

11. Schaltvorrichtung nach den Ansprüchen 7 oder 8 mit 9 oder 10, **dadurch gekennzeichnet, dass** die weiteren Ventile (21, 22) zwangsgekoppelt und über einen gemeinsamen Schalthebel (31) manuell betätigbar sind.

12. Schaltvorrichtung nach einem der Ansprüche 7 bis 11, **dadurch gekennzeichnet, dass** ein Ventilelement (23) des weiteren Ventils (21) und/oder ein weiteres Ventilelement (24) des weiteren Ventils (22) einen L-förmigen Verlauf ihrer Durchlassöffnungen (25) aufweisen.

## Claims

1. A switching device for conducting a fluid (2), comprising:
- a first treatment apparatus (3) for the fluid,
- a second treatment apparatus (4) for the fluid,
- at least one distribution valve (7, 13) in a first fluid-conducting connection (5) between a first treatment apparatus (3) for the fluid (2) and a second treatment apparatus (4) for the fluid (2),
- at least one other distribution valve (8, 14) in a second fluid-conducting connection (6) between the first (3) and the second treatment apparatus (4),
the distribution valves (7, 8, 13, 14) being assigned to the first (3) or to the second treatment apparatus (4) respectively and respectively having a manually actuated switching lever (11, 12, 15, 16) for switching the respective distribution valve (7, 8, 13, 14) at least between blocking and opening of the respective fluid-conducting connection (5, 6) to the respective treatment apparatus (3, 4), **characterised in that** the separate switching levers (11, 12, 15, 16) of the distribution valves (7, 8, 13, 14) assigned to the respective treatment apparatus (3, 4) are made and arranged such that they can be synchronously actuated by an operator with one hand, that each longitudinal axis (18) of an assigned switching lever (11, 12, 15, 16), passing from a valve element (9, 10), considered towards its respective free end (17), is made with an offset, and that the free ends (17) are brought close together spatially, without touching one another.

2. The switching device according to Claim 1, **characterised in that** there are respectively two distribution valves (7, 8, 13, 14) in the fluid-conducting connections (5, 6), that a first distribution valve (7) in the first fluid-conducting connection (5) and a second distribution valve (8) in the second fluid-conducting connection (6) are assigned to the first treatment apparatus (3) and their switching levers (11, 12) can be synchronously actuated in pairs, and that a third distribution valve (13) in the first fluid-conducting connection (5) and a fourth distribution valve (14) in the second fluid-conducting connection (6) are assigned to the second treatment apparatus (4) and their switching levers (15, 16) can be synchronously actuated in pairs.

3. The switching device according to Claim 1 or 2, **characterised in that** all of the switching levers (11, 12, 15, 16) have the same shape.

4. The switching device according to any of the preceding claims, **characterised in that** all of the switching levers (11, 12, 15, 16) each run offset facing one another with their free ends (17) relative to their longitudinal axes (18).

5. The switching device according to any of the preceding claims, **characterised in that** the distribution valves (7, 8, 13, 14) which can respectively be jointly actuated in the first and the second fluid-conducting connection (5, 6) have the same passage openings (19, 20) on their valve element (9, 10).

6. The switching device according to Claim 5, **characterised in that** the passage openings (19, 20) of the valve elements (9, 10) of the distribution valves (7, 8, 13, 14) have a T-shaped construction.

7. The switching device according to any of the preceding claims, **characterised in that** an additional valve (21) is provided in the first fluid-conducting connection (5) for supplying and/or discharging fluid (2).

8. The switching device according to Claims 2 and 7, **characterised in that** the additional valve (21) is located between the first (7) and the third distribution valve (13).

9. The switching device according to any of the preceding claims, **characterised in that** an additional valve (22) is provided in the second fluid-conducting connection (6) for supplying and/or discharging fluid (2).

10. The switching device according to Claims 2 and 9, **characterised in that** the additional valve (22) is located between the second (8) and the fourth distribution valve (14).

11. The switching device according to Claims 7 or 8 with 9 or 10, **characterised in that** the additional valves (21, 22) are positively coupled and can be manually actuated via a common switching lever (31).

12. The switching device according to any of Claims 7 to 11, **characterised in that** the passage openings (25) of a valve element (23) of the additional valve (21) and/or an additional valve element (24) of the additional valve (22) run in an L-shape.

## Revendications

1. Dispositif de commande pour conduire un fluide (2), comprenant :
- un premier dispositif (3) de traitement du fluide,
- un deuxième dispositif (4) de traitement du fluide,
- au moins une vanne (7, 13) de répartition dans une première liaison (5) fluidique entre un premier dispositif (3) de traitement du fluide (2) et un deuxième dispositif (4) de traitement du fluide (2),
- au moins une autre vanne (8, 14) de répartition dans une deuxième liaison (6) fluidique entre le premier (3) et le deuxième (4) dispositifs de traitement,
dans lequel les vannes (7, 8, 13, 14) de répartition sont associées respectivement au premier (3) ou au deuxième (4) dispositif de traitement et ont chacune un levier (11, 12, 15, 16) de manoeuvre pouvant être actionné manuellement pour mettre la vanne (7, 8, 13, 14) de répartition respective au moins entre une ouverture et une fermeture de la liaison (5, 6) fluidique vers le dispositif (3, 4) de traitement respectif, **caractérisé en ce que** les leviers (11, 12, 15, 16) de manoeuvre distincts des vannes (7, 8, 13, 14) de répartition associées au dispositif (3, 4) de traitement respectif sont constitué s et disposés de manière à pouvoir être actionnés en synchronisme par la main d'un opérateur, **en ce que** chaque axe (18) longitudinal d'un levier (11, 12, 15, 16) de manoeuvre associé est constitué en étant coudé à partir d'un élément (9, 10) de vanne en direction de son extrémité (17) libre et **en ce que** les extrémités (17) libres sont réunies étroitement dans l'espace, sans se toucher mutuellement.

2. Dispositif de commande suivant la revendication 1, **caractérisé en ce que**, dans les liaisons (5, 6) fluidiques, sont montées respectivement deux vannes (7, 8, 13, 14) de répartition, **en ce qu'**une première vanne (7) de répartition dans la première liaison (5) fluidique et une deuxième vanne (8) de répartition dans la deuxième liaison (6) fluidique sont associées au premier dispositif (3) de traitement et leurs leviers (11, 12) de manoeuvre peuvent être actionnés en synchronisme par paire et **en ce qu'**une troisième vanne (13) de répartition de la première liaison (5) fluidique et une quatrième vanne (14) de répartition de la deuxième liaison (6) fluidique sont associées au deuxième dispositif (4) de traitement et leurs leviers (15, 16) de manoeuvre peuvent être actionnés en synchronisme par paire.

3. Dispositif de commande suivant la revendication 1 ou 2, **caractérisé en ce que** tous les leviers (11, 12, 15, 16) de manoeuvre ont la même forme.

4. Dispositif de commande suivant l'une des revendications précédentes, **caractérisé en ce que** tous les leviers (11, 12, 15, 16) de manoeuvre ont chacun, rapporté à leur axe (18) longitudinal, un tracé coudé, en étant tourné l'un vers l'autre par leurs extrémités (17) libres.

5. Dispositif de commande suivant l'une des revendications précédentes, **caractérisé en ce que** les vannes (7, 8, 13, 14) de répartition pouvant être actionnées conjointement dans la première et la deuxième liaisons (5, 6) fluidiques ont les mêmes ouvertures (19, 20) de passage sur leur élément (9, 10) de vanne.

6. Dispositif de commande suivant la revendication 5, **caractérisé en ce que** les ouvertures (19, 20) de passage des éléments (9, 10) de vanne des vannes (7, 8, 13, 14) de distribution ont une structure en forme de T.

7. Dispositif de commande suivant l'une des revendications précédentes, **caractérisé en ce qu'**il est prévu une autre vanne (21) dans la première liaison (5) fluidique pour apporter et/ou évacuer du fluide (2).

8. Dispositif de commande suivant la revendication 2 et 7, **caractérisé en ce que** l'autre vanne (21) est disposée entre la première (7) et la troisième (13) vannes de répartition.

9. Dispositif de commande suivant l'une des revendications précédentes, **caractérisé en ce qu'**il est prévu une autre vanne (22) dans la deuxième liaison (6) fluidique pour apporter et/ou évacuer du fluide (2).

10. Dispositif de commande suivant la revendication 2 et 9, **caractérisé en ce que** l'autre vanne (22) est disposée entre la deuxième (8) et la quatrième (14) vannes de répartition.

11. Dispositif de commande suivant les revendications 7 ou 8 avec 9 ou 10, **caractérisé en ce que** les autres vannes (21, 22) peuvent être actionnées manuellement en étant couplées obligatoirement et par un levier (31) de manoeuvre commun.

12. Dispositif de commande suivant l'une des revendications 7 à 11, **caractérisé en ce qu'**un élément (23) de vanne de l'autre vanne (21) et/ou un autre élément (24) de vanne de l'autre vanne (22) ont un tracé en forme de L de leur ouverture (25) de passage.
